# EUROPEAN PATENT SPECIFICATION

(11) **EP 2 574 772 B1**
(45) Date of publication and mention of the grant of the patent: **18.03.2015**
(21) Application number: 11183462.8
(22) Date of filing: 30.09.2011
(51) Int. Cl.: F03D 1/00, F03D 11/04

(54) **Wind turbine tower**
Windturbinen-Turm
Tour d'éolienne

(43) Date of publication of application: 03.04.2013
(73) Proprietor: Siemens Aktiengesellschaft, 80333 München (DE)
(72) Inventor: Laurberg, Hans, 8000 Århus C (DK); Rasmussen, Anders Nygaard, 2200 Kobenhavn (DK)

(56) References cited:
- EP-B1- 1 474 579
- DE-U1-202007 003 842
- US-A1- 2009 031 639
- US-A1- 2011 058 944
- US-A1- 2011 142 680

## Description

The present invention relates to a wind turbine tower.

Wind turbine towers, especially tubular steel towers for large wind turbines, are large in diameter and weight. This may cause difficulties concerning the transportation of a tower to the wind farm and the used infrastructure.

Usually, the steel towers for wind turbines are produced as sections in shops and the sections are then transported to the place of installation. The towers are typically constructed of a number of sections which have a cylindrical or conical shape.

In the wind industry the requirements for larger turbines have resulted in corresponding requirements for larger wind turbine towers. Larger wind turbine towers have typically lead to larger tower section diameters and longer and heavier tower sections. The dimensions of tall towers for large wind turbine have reached limits defined by the infrastructure of various countries. The limiting aspects are typically physical limits such as free height under bridges and tunnels, allowable weights or the turning radii of roundabouts.

The increasing number of turbines in large wind projects has also caused difficulties since the equipment which is needed to transport the largest tower sections by road or by rail is highly specialised and is not found in the quantities necessary for the present number of transportations. Consequently, when a large number of projects require a substantial amount of transportation time by road, the availability of special equipment may become difficult in the project phase.

The problem has been solved by dimensioning, by the use of hybrid towers or by the use of modular towers. Dimensioning accepts the height and width restrictions of transportation routes and uses the restrictions as a design basis. This means in practice that the external tower diameter is fixed at a certain maximum value, typically 4.2 metres. When the diameter is fixed, then the wall thickness is dimensioned to provide the necessary stiffness and strength. For large turbines and tall towers this will typically lead to significantly higher weight. This causes higher costs compared with when no diameter restrictions are applied.

In a hybrid solution the problem is circumvented by extending the concrete foundations significantly above ground level, for example, as a cylindrical structure of, for instance, 10 metres height. This increases the effective hub height of a wind turbine where the tower design is not significantly influenced by a diameter restriction. However, above a certain practical height an extended foundation is expensive. Compared with a diameter restricted tower, a hybrid solution tower reaches an additional height of perhaps 15 metres.

A wide range of modular towers are well known in literature and in practice. Using a longitudinal split such solutions overcome the dimensional restrictions on transportation. However, difficulties occur in the assembly and the complexity of the modular elements.

In EP 1 561 883 A1 a tower for a wind turbine is disclosed, wherein the tower is at least partly composed of prefabricated metal wall parts characterised in that each wall part comprises an essentially quadrangular portion. The wall parts are provided with flanges for connecting the wall parts with each other.

In EP 2 006 471 B1 a wind turbine shell tower is disclosed, comprising a number of segments with a polygonal cross section, each segment comprising a number of flat plates which are connected to each other so as to form the polygonal cross section, whereby the flat plates are connected to each other by means of splice plates.

US 2011/0142680 A1 discloses an offshore wind turbine comprising a tower and a nacelle being fixedly attached to the top of the tower. A tower portion is formed by coupling, to each other by welding, plate members. The plate members are made of materials having different strengths, but have the same thicknesses, and the plate members are curved such that they constitute a portion of a circumference individually. Alternatively, the plate members may be made from the same material but may comprise different thicknesses such that the strength of the tower portion varies along the circumferential direction around the tower portion.

DE 20 2007 003 842 U1 discloses a tower for a wind turbine. The tower tapers towards the top and comprises at least two annular tower sections arranged on top of each other. Each of the annular tower sections consists of a plurality of prefabricated parts, wherein at least some of the prefabricated parts have a curved section. The tower has three annular tower sections. The bottom annular tower section consists of three equal wall parts, each of them comprising a curved section and two plane sections.

US 2009/0031639 A1 discloses a pre-stressed concrete tower for a wind turbine. The concrete tower consists of flat segments and of circular segments.

US 2011/0058944 A1 discloses a multi-element tapered wind turbine tower. The rotor and the nacelle of the wind turbine comprising the tapered wind turbine tower are fixedly mounted to the top end of the tower. As a consequence, the tower rotates around its longitudinal axis when the nacelle (together with the attached rotor) yaws in order to align itself with the wind direction. The tower has a curved leading edge having the shape of a half circle and a curved trailing edge having also the shape of a half circle. The half circle shape enhances the load bearing capacity of the steel, in contrast to an equal thickness of sheet steel, because the curved shape provides self stability against buckling.

EP 1 474 579 B1 discloses a wind turbine comprising a stationary vertical mast on which the moving part of the wind turbine is arranged. The mast is at least partly composed of prefabricated wall parts, wherein the mast comprises annular mast sections that are composed of the prefabricated wall parts, with several adjacent wall parts placed side by side forming the mast section. The wall parts may be made of rectangular and interconnected plates.

It is an objective of the present invention to provide a wind turbine tower with reduced weight at lower costs.

This objective is solved by a wind turbine tower as claimed in the independent claim.

The depending claims define further developments of the invention.

The wind turbine tower comprises a plurality of segments each having a modulized cross-section in the circumferential direction of the wind turbine tower. The segments have a plurality of modules, which are connected to one another in such a way that the modulized cross-section is formed. One or more segments comprise first and second modules, a first zone of the segment comprising a first module or first modules located next to each other. A second zone of the segment comprises a second module or second modules located next to each other. This results in a tower with higher strength for wind coming from one or more prevailing directions compared with one or more other directions.

In accordance with the invention two first zones are located circumferentially opposite one another. Two second zones are located circumferentially opposite one another. The first and the second zones are located next to each other. The first modules have a higher stability than the second modules. Further the module or the modules of the first zone located at the tower's luff side of the prevailing wind direction at the location of the wind turbine (22) comprise a lower pressure resistance and a higher tensile strength than the module ore the modules of the first zone located at the tower's downwind (lee) side of said prevailing wind direction. Thus, a stable and symmetric construction can be obtained.

Stability is the ability of the wind turbine tower built by the modules to resist against mechanical loads created by the forces of the wind to the wind turbine. Pressure resistance and a tensile strength are the main parameters of the stability.

Preferably, the modules are respectively formed of plates, which are embodied as essentially rectangular or trapezoid in form and are connected on their longitudinal sides to plates of the same segment and on their shorter sides preferably to plates of a segment lying thereabove and/or therebelow, the plates forming a polygonal segment section.

Advantageously, this non-uniform section results in better adaptation to non-symmetric loads of a wind turbine tower.

Preferably, at least one segment comprises a third module or third modules). A third zone of the segment comprises a third module or third modules being located next to each other. The third modules have a higher stability than the second modules and a lower stability than the first modules. The third zones are located between the first and the second zones. Advantageously, this embodiment of a section results in better adaptation to non-symmetric loads of a wind turbine tower.

Preferably, he prevailing wind direction at the location of the wind turbine is essentially parallel to the sum of the vectors of the normals of the first modules.

Preferably, the position of the more stable modules in circumferential direction depend on the prevailing wind direction at the location of the wind turbine. Thus, strength of the wind turbine tower and loads created by the wind turbine are acting in the same direction resulting in reduced costs of the wind turbine tower.

Preferably, the stability of the first, second and third modules depends on the shape and/or the material of the modules.

Preferably, the first plates of the first module are thicker than the second plates of the second module.

Preferably, the first plates have the same thickness as the second and/or third plates, wherein the first plates comprise a higher strength than the second plates due to the different steel alloy of the plates.

Preferably, the first and second modules are constructed by a lattice structure, preferably a steel lattice structure.

Preferably, the first and second modules are made of reinforced concrete with more reinforcements and/or concrete at the location of the more stable modules.

Preferably, the stability of the fundament in circumferential direction distributing the mechanical load of the wind turbine tower into the ground is proportional on the stability of the modules in the respective area of the fundament. Thus, a cost-effective fundament with less material is provided.

The flat plates are connected to each other by means of splice plates. The cross section of the segments may be a regular polygon, which means that the angle between adjacent flat plates has the same value. Alternatively, the cross section of the segments may be an irregular polygon, which means that the angle between adjacent flat plates varies. The segments may be connected to each other by means of splice plates, flanges, bolts, nuts, bolt extensions, washers, etc.. Furthermore, the flat plates can be cut using plasma, oxygen/gas or a laser.

Thus, mass production, transport and mounting of the tower is simplified.

Compared to the known state of the art modular tower solutions, which typically require rolling, bending and/or welding of the steel plates which leads to added manufacturing costs, the use of flat plates minimises the manufacturing costs by eliminating the rolling, bending and/or welding processes. Furthermore, flat plates can be delivered in cut condition by almost any steel mill and can be transported on standard truck trailers, which increases the availability of transportation equipment. Flat plates can be delivered at length up to 14 metres, which is a possible length of a segment. Moreover, flat plates are easy to surface treat by automatic blasting and surface treatment facilities so as to increase, for example, the resistance to wear and/or corrosion.

Moreover, the flat plates can be easily assembled into various cross sections of towers and in this way reduce the risk of buckling of the tower shells.

Further features, properties and advantages of the present invention will become clear from the following description of embodiments in conjunction with the accompanying drawings.
- Fig. 1: schematically shows a part of a wind turbine tower in a side view;
- Fig. 2: schematically shows a part of a wind turbine tower of figure 1 from top view A;
- Fig. 3: schematically shows a horizontal cut B-B of a non-uniform shell tower from figures 1 in a first embodiment;
- Fig. 4: schematically shows a horizontal cut B-B of a non-uniform shell tower from figure 1 in a second embodiment;
- Fig. 5: schematically shows a graph with the probability of a significant wind event dependent on the wind direction at the location of the wind turbine tower.

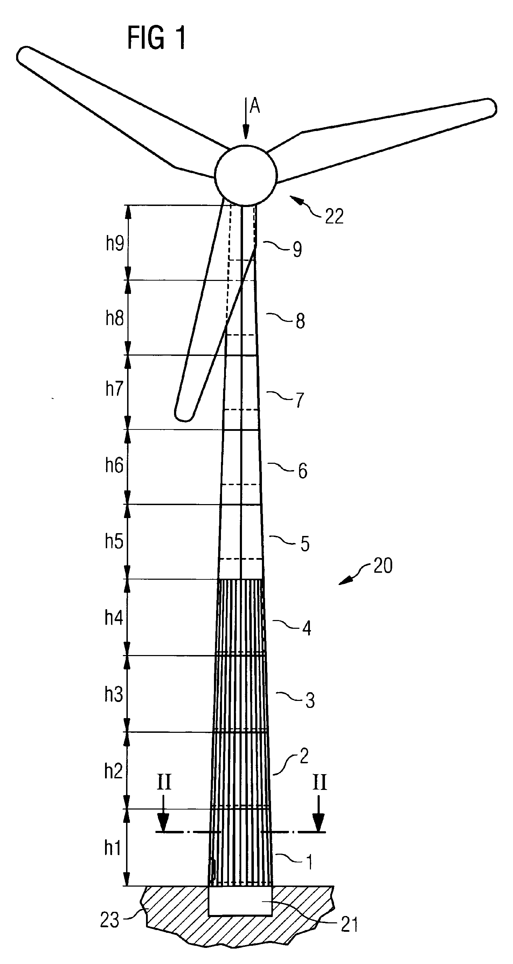

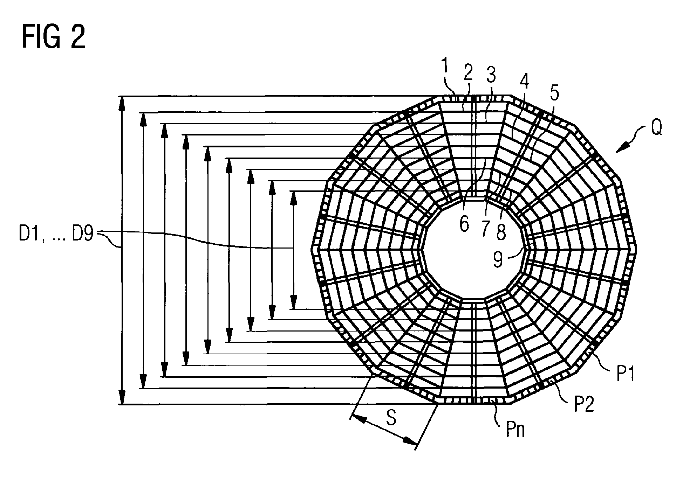

The figures 1 and 2 show a wind turbine shell tower 20 in side view and from top view A.

The shell tower 20 is fixed to the ground 23 via a foundation 21.

The shell tower 20 is vertically segmented into polygonal segments 1,2,3,4,5,6,7,8,9. The segments 1,2,3,4,5,6,7,8,9 comprise the respective heights h1,h2,h3,h4,h5,h6,h7,h8,h9 and diameters D1,D2,D3,D4,D5,D6.D7.D8,D9. On top of the shell tower 20, there is mounted a wind turbine 22 with a generator to produce electrical power. Each segment comprises a number of rectangular flat plates P1,P2,...,Pn which are connected to each other so as to form a polygonal cross section Q, as shown in figure 2, whereby the flat plates P1,P2,...,Pn are connected preferably to each other by means of splice plates or by welded joints. Preferably, the length S of each side of the polygonal section Q is equal, i.e. the width of the plates P1, P2, ..., Pn of a segment 1,2,3,4,5,6,7,8,9 is equal.

The segments 1 to 9 have the respective diameters D1 to D9 which decreases from segment to segment in direction of the wind turbine 22 on the top of the shell tower 20, according to the higher mechanical load near the foundation 21 and the lower mechanical load on the top of the tower 20.

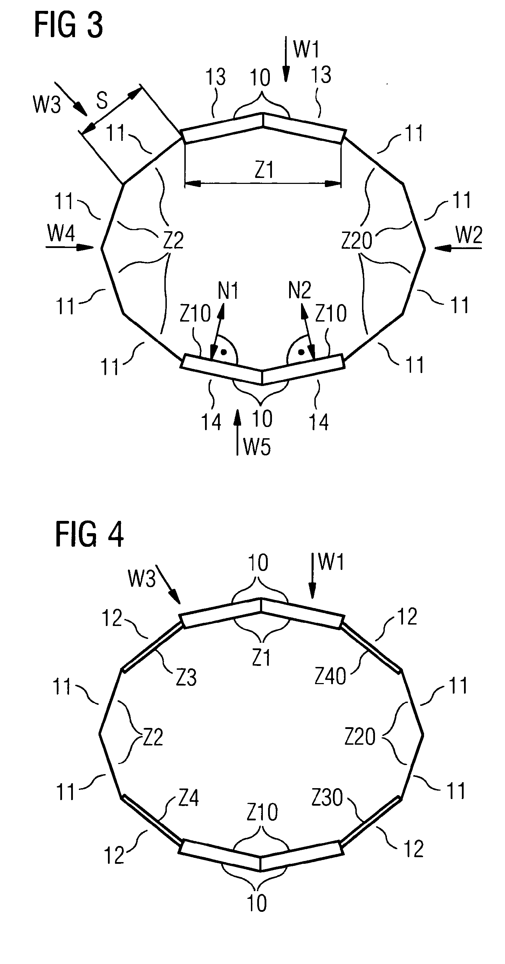

In figure 3, a horizontal cut II-II of the segment 1 of the non-uniform shell tower 20 of figure 1 with a twelve-sided polygonal section is shown. Preferably, at least some or all of the other segments 2 to 9 comprise this twelve-sided polygonal section or other side numbers.

The segment 1 has a modulized cross-section Q in the circumferential direction of the segment 1. The segment 1 has a plurality of modules 10,11, which are connected to one another in such a way that the modulized cross-section Q is formed.

The segment 1 comprises first and second modules 10,11. There are first zones Z1,Z10 of the segment 1 being located opposite one another and comprising each first modules 10 being located next to each other.

There are second zones Z2,Z20 of the segment 1 being located opposite one another and comprising each second modules 11 being located next to each other.

The first and the second zones Z1,Z10,Z2,Z20 are located next to each other. The first modules 10 have a higher stability than the second modules 11.

The modules are constructed as twelve plates 10,11. Two zones Z1,Z10 of each time two adjacent first plates 10 are located opposite one another in the polygonal section. Two zones Z2,Z20 of each time four adjacent second plates 11 are located opposite one another in the polygonal section. The first plates 10 are thicker than the second plates 11. Therefore, the first plates 10 are more stable than the second plates 11. In result, the tower 20 is more stable against loads caused by wind coming from direction W1 than by wind coming from direction W2. Therefore, the wind turbine tower 20 should be built up with the thicker plates 10 being located in the main wind direction W1 at the location of the wind turbine tower 20.

The plates 10,11,12 of the polygonal section Q of a segment 1,2,3,4,5,6,7,8,9 have preferably an equal length S in circumferential direction, thus ease the mass production.

In accordance with the invention, there is a module 13 or the modules 13 of the first zone Z1 located at the tower's luff side of the prevailing wind direction W1 at the location of the wind turbine 22 comprising a lower pressure resistance and a higher tensile strength than the module 14 ore the modules 14 of the first zone Z10 located at the wind turbine tower's downwind (lee) side of said prevailing wind direction W1. Optionlly, there are several prevailing wind directions W1 (North),W3 (North-West) with the respective lower pressure resistance and higher tensile strength in comparison with non-prevailing wind directions W4 (West), W2 (East) and W5 (South)

Fig. 4 shows an embodiment of the horizontal cut II-II of the segment 1 from figure 3 with twelve plates 10,11,12. Between each first zone Z1,Z10 and each second zone, there is a third zone Z3,Z30 with one or optionally more third plates 12. The third plates 12 have a thickness between the thickness of the first plates 10 and the second plates 11. So, four plates 11 are thin, four plates 12 are medium-thick and four plates 10 are thick. This embodiment is suitable to loads created by the main wind direction W1 which has some variations of until about 30° up to the wind direction W3.

The plates 10,11,12 are also called shells due to the preferably trapezoid form of the plates 10,11,12 of the segments 1 to 9. Thus, the circumferential connected plates 10,11,12 vertically form a conical shape of the tower 20.

The stability of the fundament 21 distributing the mechanical load of the wind turbine tower 20 into the ground 23 via the fundament 21 is proportional to the strength of the plates in the respective area of the fundament 21, thus reducing the costs of the fundament 21.

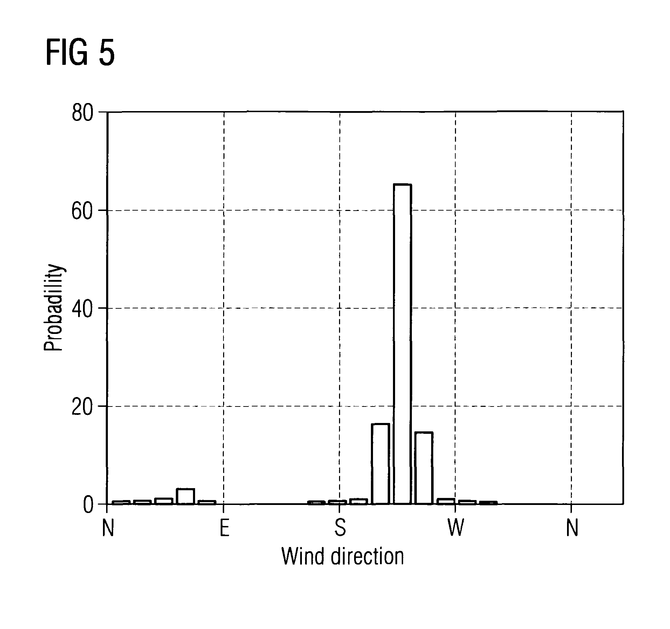

In figure 5, there is a graph shown indicating the frequency and probability of different wind directions at the location of the installed wind turbine tower 20 and the wind turbine 20. Wind event data with the wind turbine producing less than 25% of nominal power are not significant for wind tower loads which may result in long term material fatigue of the wind tower independent from wind direction and therefore have been removed from the graph.

At this specific example the wind direction is from South-West most of the time - and so are the loads of the wind turbine tower 20. The strength of the wind turbine tower 20 is at its maximum with the main direction of the wind W1 - in this case from South-West. The wind turbine tower 20 and optionally the foundation 21 can handle more loads if it comes from south west compared if it comes from North-West or South-East.

On such a site a non-uniform tower as shown in figure 3 or 4 will be much cheaper compared with a uniform tower used generally due to the reduce necessary material of the thinner plates 11,12 or alternatively the smaller amount of reinforced concrete.

Constructing a non-symmetric tower can not only be used in the shown shell tower but also be used in a tubular steel tower, tower with four legs, lattice tower or a concrete tower.

Instead of changing the thickness of the plates to vary the strength of the plates dependent on the location on the tower polygon it is recommendable to vary the
- material quality, e.g material as steel, reinforced concrete
- diameter of the tower
- dimensions, ex. on lattice towers
- directional stiffness and strength improvement of the tower reinforcement in the tower/foundation
- foundation or tower form/shape/geometry

These variations can be combined.

## Claims

1. Wind turbine tower with a plurality of segments (1,2,3,4,5,6,7,8,9), which have a modulized cross-section (Q) in the circumferential direction of the wind turbine tower (1,2,3,4,5), wherein at least one segment (1,2,3,4) has a plurality of modules (10,11,12), which are connected to one another in such a way that the modulized cross-section (Q) is formed, wherein
- at least one segment (1,2,3,4,5,6,7,8,9) comprises first and second modules (10,11),
- a first zone (Z1,Z10) of the segment (1,2,3,4,5,6,7,8,9) comprises a first module (10,13,14) or first modules (10,13,14) located next to each other,
- a second zone (Z2,Z20) of the segment (1,2,3,4,5,6,7,8,9) comprises a second module or second modules (11) being located next to each other,
- two first zones (Z1, Z10) are located circumferentially opposite one another,
- two second zones (Z2, Z20) are located circumferentially opposite one another,
- the first and the second zones (Z1, Z10, Z2, Z20) are located next to each other,
- the first modules (10) have a higher stability than the second modules (11) resulting in a tower (1) with higher strength of wind from one or more prevailing directions (W1,W3) compared with one or more other directions (W2,W4), wherein the stability of the first and second modules (10, 11) depends on the shape and/or the material of the modules (10, 11), **characterised in that**
the module (13) or the modules (13) of the first zone (Z1) and/or second zone (Z2,Z20) located at the tower's luff side of one or more prevailing wind directions (W1,W3) at the location of the wind turbine comprise a lower pressure resistance and a higher tensile strength than the module (14) or the modules (14) of the first zone (Z10) and/or second zone (Z2,Z20) located at the tower's downwind (lee) side of said prevailing wind directions (W1,W3).

2. Wind turbine tower according to the preceding claim,
**characterised in that**
the modules (10, 11, 12) are respectively formed of plates (10, 11, 12), which are embodied as essentially rectangular or trapezoid in form and are connected on their longitudinal sides to plates (10, 11, 12) of the same segment (1, 2, 3, 4, 5, 6, 7, 8, 9) and on their shorter sides to plates (10, 11, 12) of a segment (1, 2, 3, 4, 5, 6, 7, 8, 9) lying thereabove and/or therebelow, wherein the plates (10, 11, 12) form a polygonal segment section.

3. Wind turbine tower according to one of the preceding claims, **characterised in that**
- at least one segment (1,2,3,4,5,6,7,8,9) comprises a third module or third modules (12),
- a third zone (Z3,Z30,Z4,Z40) of the segment (1,2,3,4,5,6,7,8,9) comprises a third module (12) or third modules (12) being located next to each other,
- the third modules (12) have a higher stability than the second modules (11) and a lower stability than the first modules (10),
- the third zones (Z3,Z30,Z4,Z40) are located between the first and the second zones (Z1,Z10,Z2,Z20).

4. Wind turbine tower according to the preceding claim,
**characterised in that**
further the stability of the third modules (12) depends on the shape and/or the material of the modules (12).

5. Wind turbine tower according to one of the preceding claims 3 and 4, **characterised in that**
the third modules (12) are respectively formed of a third plate (12), and
the first plates (10) have the same thickness as the second (11) and/or third plates (12), wherein the first plates (10) comprise a higher strength than the second plates (11) due to the different steel alloy of the plates (10,11,12).

6. Wind turbine tower according to the preceding claim,
**characterised in that**
the second plates (11) comprise a lower strength and the first plates (10) a higher strength than the third plates (12) due to the different steel alloy of the plates (10,11,12)

7. Wind turbine tower according to one of the preceding claims, **characterised in that**
the prevailing wind direction (W) at the location of the wind turbine (6) is essentially parallel to the sum of the vectors of the normals (N1,N2) of the first modules (10).

8. Wind turbine tower according to one of the preceding claims, **characterised in that**
the position of the more stable modules (11,12) in circumferential direction depend on and preferably are located in the prevailing wind direction (W) at the location of the wind turbine.

9. Wind turbine tower according to one of the preceding claims, **characterised in that**
the first plates (10) of the first module (10) are thicker than the second plates (11) of the second module (11).

10. Wind turbine tower according to one of the preceding claims, **characterised in that**
the first and second modules (10,11) are constructed by a lattice structure, preferably a steel lattice structure.

11. Wind turbine tower according to one of the preceding claims, **characterised in that**
the first and second modules (10,11) are made of reinforced concrete with more reinforcements and/or concrete at the location of the more stable modules (11,12).

12. Wind turbine tower according to one of the preceding claims, **characterised in that**
the stability of the fundament (21) in circumferential direction distributing the mechanical load of the wind turbine tower (20) into the ground (23) is proportional on the stability of the modules (10,11,12) in the respective area of the fundament (21).

13. Wind turbine tower according to one of the preceding claims, **characterised in that**
the plates (10,11,12) of the polygonal section (Q) of a segment (1,2,3,4,5,6,7,8,9) have an equal length (S) in circumferential direction.

## Patentansprüche

1. Windturbinenturm mit mehreren Segmenten (1, 2, 3, 4, 5, 6, 7, 8, 9), die einen in Umfangsrichtung des Windturbinenturms (1, 2, 3, 4, 5) modularisierten Querschnitt (Q) aufweisen, wobei wenigstens ein Segment (1, 2, 3, 4) mehrere Module (10, 11, 12) aufweist, die derart miteinander verbunden sind, dass der modularisierte Querschnitt (Q) ausgebildet wird, wobei
- mindestens ein Segment (1, 2, 3, 4, 5, 6, 7, 8, 9) erste und zweite Module (10, 11) umfasst,
- ein erster Bereich (Z1, Z10) des Segments (1, 2, 3, 4, 5, 6, 7, 8, 9) ein erstes Modul (10, 13, 14) oder erste Module (10, 13, 14), die nebeneinander angeordnet sind, umfasst,
- ein zweiter Bereich (Z2, Z20) des Segments (1, 2, 3, 4, 5, 6, 7, 8, 9) ein zweites Modul oder zweite Module, die nebeneinander angeordnet sind, umfasst,
- zwei erste Bereiche (Z1, Z10) einander in Umfangsrichtung gegenüberliegend angeordnet sind,
- zwei zweite Bereiche (Z2, Z20) einander in Umfangsrichtung gegenüberliegend angeordnet sind,
- die ersten und die zweiten Bereiche (Z1, Z10, Z2, Z20) nebeneinander angeordnet sind,
- die ersten Module (10) eine höhere Stabilität als die zweiten Module (11) aufweisen, was einen Turm (1) mit höherer Windstärke aus einer oder mehreren vorherrschenden Richtungen (W1, W3), verglichen mit einer oder mehreren anderen Richtungen (W2, W4), zur Folge hat, wobei die Stabilität der ersten und zweiten Module (10, 11) von der Form und/oder dem Material der Module (10, 11) abhängt, **dadurch gekennzeichnet, dass**
das Modul (13) oder die Module (13) des ersten Bereiches (Z1) und/oder zweiten Bereiches (Z2, Z20), die auf der Luvseite des Turmes bezüglich einer oder mehrerer vorherrschender Windrichtungen (W1, W3) am Standort der Windturbine angeordnet sind, einen geringeren Druckwiderstand und eine höhere Zugfestigkeit aufweisen, als das Modul (14) oder die Module (14) des ersten Bereiches (Z10) und/oder zweiten Bereiches (Z2, Z20), die auf der windabgewandten Seite (Leeseite) des Turmes bezüglich dieser vorherrschenden Windrichtungen (W1, W3) angeordnet sind.

2. Windturbinenturm nach dem vorhergehenden Anspruch, **dadurch gekennzeichnet, dass**
die Module (10, 11, 12) jeweils von Platten (10, 11, 12) gebildet werden, welche im Wesentlichen rechteckig oder trapezförmig ausgebildet sind und an ihren Längsseiten mit Platten (10, 11, 12) des gleichen Segments (1, 2, 3, 4, 5, 6, 7, 8, 9) und an ihren kürzeren Seiten mit Platten (10, 11, 12) eines darüberliegenden und/oder darunterliegenden Segments (1, 2, 3, 4, 5, 6, 7, 8, 9) verbunden sind, wobei die Platten (10, 11, 12) einen polygonalen Segmentquerschnitt bilden.

3. Windturbinenturm nach einem der vorhergehenden Ansprüche, **dadurch gekennzeichnet, dass**
- mindestens ein Segment (1, 2, 3, 4, 5, 6, 7, 8, 9) ein drittes Modul oder dritte Module (12) umfasst,
- ein dritter Bereich (Z3, Z30, Z4, Z40) des Segments (1, 2, 3, 4, 5, 6, 7, 8, 9) ein drittes Modul (12) oder dritte Module (12), die nebeneinander angeordnet sind, umfasst,
- die dritten Module (12) eine höhere Stabilität als die zweiten Module (11) und eine geringere Stabilität als die ersten Module (10) aufweisen,
- die dritten Bereiche (Z3, Z30, Z4, Z40) zwischen den ersten und den zweiten Bereichen (Z1, Z10, Z2, Z20) angeordnet sind.

4. Windturbinenturm nach dem vorhergehenden Anspruch, **dadurch gekennzeichnet, dass**
ferner die Stabilität der dritten Module (12) von der Form und/oder dem Material der Module (12) abhängt.

5. Windturbinenturm nach einem der vorhergehenden Ansprüche 3 und 4, **dadurch gekennzeichnet, dass**
die dritten Module (12) jeweils von einer dritten Platte (12) gebildet werden, und
die ersten Platten (10) dieselbe Dicke wie die zweiten (11) und/oder dritten Platten (12) aufweisen, wobei die ersten Platten (10) infolge der unterschiedlichen Stahllegierung der Platten (10, 11, 12) eine höhere Festigkeit als die zweiten Platten (11) aufweisen.

6. Windturbinenturm nach dem vorhergehenden Anspruch, **dadurch gekennzeichnet, dass**
infolge der unterschiedlichen Stahllegierung der Platten (10, 11, 12) die zweiten Platten (11) eine geringere Festigkeit und die ersten Platten (10) eine höhere Festigkeit als die dritten Platten (12) aufweisen.

7. Windturbinenturm nach einem der vorhergehenden Ansprüche, **dadurch gekennzeichnet, dass**
die vorherrschende Windrichtung (W) am Standort der Windturbine (6) im Wesentlichen parallel zur Summe der Vektoren der Normalen (N1, N2) der ersten Module (10) ist.

8. Windturbinenturm nach einem der vorhergehenden Ansprüche, **dadurch gekennzeichnet, dass**
die Position der stabileren Module (11, 12) in Umfangsrichtung von der vorherrschenden Windrichtung (W) am Standort der Windturbine abhängt und die stabilere Module (11, 12) vorzugsweise in dieser vorherrschenden Windrichtung (W) angeordnet sind.

9. Windturbinenturm nach einem der vorhergehenden Ansprüche, **dadurch gekennzeichnet, dass**
die ersten Platten (10) des ersten Moduls (10) dicker als die zweiten Platten (11) des zweiten Moduls (11) sind.

10. Windturbinenturm nach einem der vorhergehenden Ansprüche, **dadurch gekennzeichnet, dass**
die ersten und zweiten Module (10, 11) als eine Gitterstruktur ausgeführt sind, vorzugsweise eine Stahlgitterstruktur.

11. Windturbinenturm nach einem der vorhergehenden Ansprüche, **dadurch gekennzeichnet, dass**
die ersten und zweiten Module (10, 11) aus Stahlbeton mit mehr Bewehrung und/oder Beton am Ort der stabileren Module (11, 12) hergestellt sind.

12. Windturbinenturm nach einem der vorhergehenden Ansprüche, **dadurch gekennzeichnet, dass**
die Stabilität des Fundaments (21) in Umfangsrichtung, welches die mechanische Last des Windturbinenturmes (20) auf den Boden (23) verteilt, proportional zur Stabilität der Module (10, 11, 12) in dem jeweiligen Bereich des Fundaments (21) ist.

13. Windturbinenturm nach einem der vorhergehenden Ansprüche, **dadurch gekennzeichnet, dass**
die Platten (10, 11, 12) des polygonale Querschnitts (Q) eines Segments (1, 2, 3, 4, 5, 6, 7, 8, 9) eine gleiche Länge (S) in Umfangsrichtung aufweisen.

## Revendications

1. Mat d'éolienne comprenant une pluralité de segments (1, 2, 3, 4, 5, 6, 7, 8, 9), qui présentent une section transversale modulaire (Q) dans la direction circonférentielle du mat d'éolienne (1, 2, 3, 4, 5), dans lequel au moins un segment (1, 2, 3, 4) présente une pluralité de modules (10, 11, 12), qui sont raccordés les uns aux autres de telle manière que la section transversale modulaire (Q) est formée, dans lequel
- au moins un segment (1, 2, 3, 4, 5, 6, 7, 8, 9) comprend des premier et deuxième modules (10, 11),
- une première zone (Z1, Z10) du segment (1, 2, 3, 4, 5, 6, 7, 8, 9) comprend un premier module (10, 13, 14) ou des premiers modules (10, 13, 14) situés à proximité les uns des autres,
- une deuxième zone (Z2, Z20) du segment (1, 2, 3, 4, 5, 6, 7, 8, 9) comprend un deuxième module ou des seconds modules (11) situés à proximité les uns des autres,
- deux premières zones (Z1, Z10) sont situées circonférentiellement à l'opposé les unes des autres,
- deux secondes zones (Z2, Z20) sont situées de manière circonférentielle à l'opposé l'une de l'autre,
- les premières et secondes zones (Z1, Z10, Z2, Z20) sont situées à proximité les unes des autres,
- les premiers modules (10) présentent une stabilité supérieure à celle des seconds modules (11) avec pour résultat un mat (1) présentant une résistance au vent venant d'une ou plusieurs direction(s) dominante(s) (W1, W3) supérieure à une résistance au vent venant d'une ou plusieurs autre(s) direction(s) (W2, W4), dans lequel la stabilité des premiers et seconds modules (10, 11) dépend de la forme et/ou du matériau des modules (10, 11), **caractérisé en ce que**
le module (13) ou les modules (13) de la première zone (Z1) et/ou de la deuxième zone (Z2, Z20) situé du côté au vent (luff) du mat pour une ou plusieurs direction(s) de vent dominante(s) (W1, W3) à l'emplacement de l'éolienne présente ou présentent une résistance inférieure à la pression et une résistance supérieure à la traction par rapport au module (14) ou aux modules (14) de la première zone (Z10) et/ou de la deuxième zone (Z2, Z20) située du côté sous le vent (aval) du mat pour lesdites directions de vent dominantes (W1, W3).

2. Mat d'éolienne selon la revendication précédente, **caractérisé en ce que**
les modules (10, 11, 12) sont respectivement formés de plaques (10, 11, 12), qui sont réalisées sous une forme essentiellement rectangulaire ou trapézoïdale et sont raccordées sur leurs côtés longitudinaux à des plaques (10, 11, 12) du même segment (1, 2, 3, 4, 5, 6, 7, 8, 9) et, sur leurs côtés plus courts, à des plaques (10, 11, 12) d'un segment (1, 2, 3, 4, 5, 6, 7, 8, 9) situé au-dessus et/ou en dessous, dans lequel les plaques (10, 11, 12) forment une section de segment polygonale.

3. Mat d'éolienne selon l'une quelconque des revendications précédentes, **caractérisé en ce que**
- au moins un segment (1, 2, 3, 4, 5, 6, 7, 8, 9) comprend un troisième module ou des troisièmes modules (12),
- une troisième zone (Z3, Z30, Z4, Z40) du segment (1, 2, 3, 4, 5, 6, 7, 8, 9) comprend un troisième module (12) ou des troisièmes modules (12) situés à proximité les uns des autres,
- les troisièmes modules (12) présentent une stabilité supérieure à celle des deuxièmes modules (11) et une stabilité inférieure à celle des premiers modules (10),
- les troisièmes zones (Z3, Z30, Z4, Z40) sont situées entre les premières et deuxièmes zones (Z1, Z10, Z2, Z20).

4. Mat d'éolienne selon la revendication précédente, **caractérisé en ce que**
la stabilité des troisièmes modules (12) dépend en outre de la forme et/ou du matériau des modules (12).

5. Mat d'éolienne selon la revendication 3 ou 4, **caractérisé en ce que**
les troisièmes modules (12) sont respectivement formés d'une troisième plaque (12), et
les premières plaques (10) présentent la même épaisseur que les deuxièmes (11) et/ou troisièmes plaques (12), dans lequel les premières plaques (10) présentent une résistance supérieure à celle des deuxièmes plaques (11) en raison de l'alliage d'acier différent des plaques (10, 11, 12).

6. Mat d'éolienne selon la revendication précédente, **caractérisé en ce que**
les deuxièmes plaques (11) présentent une résistance inférieure et les premières plaques (10) présentent une résistance supérieure à celle des troisièmes plaques (12) en raison de l'alliage d'acier différent des plaques (10, 11, 12).

7. Mat d'éolienne selon l'une quelconque des revendications précédentes, **caractérisé en ce que**
la direction de vent dominante (W) à l'emplacement de l'éolienne (6) est essentiellement parallèle à la somme des vecteurs des normales (N1, N2) des premiers modules (10).

8. Mat d'éolienne selon l'une quelconque des revendications précédentes, **caractérisé en ce que**
la position des modules plus stables (11, 12) dans une direction circonférentielle dépend de, et est située de manière préférée dans, la direction de vent dominante (W) à l'emplacement de l'éolienne.

9. Mat d'éolienne selon l'une quelconque des revendications précédentes, **caractérisé en ce que**
les premières plaques (10) du premier module (10) sont plus épaisses que les deuxièmes plaques (11) du deuxième module (11).

10. Mat d'éolienne selon l'une quelconque des revendications précédentes, **caractérisé en ce que**
les premiers et deuxièmes modules (10, 11) sont construits selon une structure en treillis, de manière préférée une structure en treillis d'acier.

11. Mat d'éolienne selon l'une quelconque des revendications précédentes, **caractérisé en ce que**
les premiers et deuxièmes modules (10, 11) sont faits de béton renforcé avec davantage de renforcements et/ou de béton à l'emplacement des modules plus stables (11, 12).

12. Mat d'éolienne selon l'une quelconque des revendications précédentes, **caractérisé en ce que**
la stabilité de la fondation (21) dans la direction circonférentielle répartissant la charge mécanique du mat d'éolienne (20) dans le sol (23) est proportionnelle à la stabilité des modules (10, 11, 12) sur la surface respective de la fondation (21).

13. Mat d'éolienne selon l'une quelconque des revendications précédentes, **caractérisé en ce que**
les plaques (10, 11, 12) de la section polygonale (Q) d'un segment (1, 2, 3, 4, 5, 6, 7, 8, 9) présentent une longueur égale (S) dans la direction circonférentielle.
